# EUROPÄISCHE PATENTSCHRIFT

(11) **EP 1 017 013 B1**
(45) Veröffentlichungstag und Bekanntmachung des Hinweises auf die Patenterteilung: **21.03.2007**
(21) Anmeldenummer: 99124273.6
(22) Anmeldetag: 04.12.1999
(51) Int. Cl.: G06K 13/08

(54) **Schliessvorrichtung für ein Lese-/Schreibaggregat für Datenkarten**
Locking mechanism for a data card read/write apparatus
Dispositif de verrouillage pour un appareil de lecture/écriture de cartes de données

(30) Priorität: 11.12.1998 DE 19857226
(43) Veröffentlichungstag der Anmeldung: 05.07.2000
(73) Patentinhaber: SIEMENS AKTIENGESELLSCHAFT, 80333 München (DE)
(72) Erfinder: Burkart, Harald, Dipl.-Ing.(FH), 78054 Villingen-Schwenningen (DE)

(56) Entgegenhaltungen:
- EP-A- 0 780 814
- DE-A- 4 318 333

## Beschreibung

Die Erfindung betrifft eine Schließvorrichtung für ein Lese-/Schreibaggregat für Datenkarten, wobei das Lese-/Schreibaggregat eine mit einer Einstecköffnung für die Datenkarten versehene Frontwand und eine die Datenkarten in der Lese-/Schreibposition halternde Kartenaufnahme umfasst.

Die EP 780 814 A2 offenbart ein kartengesteuertes Gerät, bei dem ein Schließelement mit einer Öffnung um ein Aufnahmeteil für eine Karte rotierbar gehalten ist. Die Karte lässt sich daher nur in einer bestimmten Stellung des Schließelementes in das Aufnahmeteil einführen. Die Steuerung des Schließelementes gestaltet sich hierdurch sehr aufwändig.

Die DE 43 18 333 A1 offenbart einen Kartenleser, bei dem eine einen Einführungsschlitz verschließende Vorrichtung in dem Einführungsschlitz angeordnet ist. Die Vorrichtung ist drehbar und verschließt in Abhängigkeit von ihrer Drehstellung wahlweise den Einführungsschlitz oder gibt diesen frei. Bei nicht mit der Karte belegtem Einführungsschlitz sperrt ein Schließelement den Zugang derart, dass die Sperrung mit dem Einführen der Karte aufhebbar ist.

Eine der Einstecköffnung eines gattungsgemäßen Aggregates zugeordnete Schließvorrichtung ist besonders dann zwingend erforderlich, wenn, wie beispielsweise bei der Erfassung von Fahrt- und Arbeitszeitdaten in Kraftfahrzeugen, die Gefahr der Störbarkeit der Datenübertragung beziehungsweise die Gefahr gezielter Manipulationen der zu lesenden beziehungsweise aufzuzeichnenden Daten besteht und ein Vermeiden von Manipulationen durch Vorsehen eines größeren Transportweges und durch Umlenken der Datenkarten zwischen einer Einstecköffnung und einer Lese-/Schreibstation nicht realisierbar ist. Zweifellos ist diese Situation bei den in Fahrzeugen verwendeten, mit einer Datenkarteaufnahme ausgerüsteten Fahrtschreibern oder auch autonomen dem Armaturenbrett eines Kraftfahrzeuges zugeordneten Datenkartenaggregaten gegeben, wobei solche Geräte zweckmäßigerweise im haptischen Bereich des Fahrers angeordnet werden müssen, wo zusätzlich eine erhebliche Verschmutzungsgefahr und Raumnot herrscht. Die sich daraus ergebende Aufgabe besteht im wesentlichen darin, die vorzusehende Schließvorrichtung derart zu gestalten, dass sie bei den in einem Kraftfahrzeug gegebenen rauhen Handhabungsbedingungen eine verlässliche Funktion bietet und Manipulationen sowie Verschmutzungen weitgehend verhindert sind. Im Hinblick auf eine Anwendung in Fahrtschreibern sollte die Schließvorrichtung ferner eine möglichst geringe Bauhöhe aufweisen und für eine Serienfertigung konzipiert sein.

Zwei alternative Lösungsgedanken für die gestellte Aufgabe beschreibt der Patentanspruch 1. Weitere vorteilhafte Ausgestaltungen der Erfindung sind in den dem Anspruch 1 nachgestellten Unteransprüchen aufgezeigt.

Ein wesentlicher Vorteil der gefundenen Lösung ist darin zu sehen, dass die Schließvorrichtung nach außen einerseits anzeigt, dass sich eine Datenkarte in dem Lese-/Schreibaggregat befindet und gleichzeitig einen Zugriff auf die Datenkarte sowie ein Eindringen von Schmutz wirksam verhindert, andererseits anzeigt, dass das Lese-/Schreibaggregat frei ist und gleichzeitig den Zugang zur Kartenaufnahme beziehungsweise zum Kartenschacht verschmutzungssicher abdeckt, wobei diese Abdeckung mittels einer Datenkarte betätigbar ist, das heißt, dass das erfindungsgemäße Schließelement beim Eingaben einer Datenkarte verschwenkt wird. Dabei ist bemerkenswert, dass das Eingeben einer Datenkarte keinen Griffwechsel erfordert, also mit einer einfachen Handbewegung erfolgen kann. Außerdem lässt sich durch das frontseitig überlappende Verschließen der Einstecköffnung in Verbindung mit einer Stellungsabfrage des Schließelementes nachweisen, dass Maßnahmen getroffen worden sind, die Manipulationen ermöglichen. Eine solche Maßnahme könnte beispielsweise darin bestehen, dass an der Datenkarte eine Leiterfolie befestigt wird, die bei eingegebener Datenkarte aus der Einstecköffnung herausragt und über die ein "Abhören" und ein Stören der Datenübertragung gegebenenfalls auch ein gezieltes Verändern der Daten vorgenommen werden könnte.

Vorteilhaft ist ferner, dass der Raumbedarf der gefundenen Lösung, insbesondere was die Bauhöhe angelangt, sehr gering ist und das Schließelement auf einfache Weise mit dem Lese-/Schreibaggregat zu einer Baueinheit verbindbar ist. Um jeweils eine stabile Endstellung des Schließelementes zu erzielen, kann der Antrieb des Schließelementes motorisch oder mittels eines Elektromagneten erfolgen. Denkbar ist ferner ein in geeigneter Weise ausgebildetes Kippsprungwerk oder eine getriebliche Verbindung mit der zwischen einer Eingabe-/Entnahmeposition und einer Lese-/Schreibposition transportierten Kartenaufnahme gemäß des im folgenden näher beschriebenen, bevorzugten Ausführungsbeispiels.

Von den Zeichnungen zeigen:
- Figur 1A, 1B, 1C: Funktionsstudien der erfindungsgemäßen Schließvorrichtung,
- Figur 2: eine mit mehreren Freischnitten versehene, teilweise Draufsicht eines Fahrtschreibers, in welchem ein Lese-/Schreibaggregat mit dem bevorzugten Ausführungsbeispiel der erfindungsgemäßen Schließvorrichtung eingebaut ist,
- Figur 3: eine vergrößerte Seitenansicht der Teildarstellung des Fahrtschreibers gemäß Figur 2 mit einem Freischnitt zur Darstellung einer Seitenansicht der Schließvorrichtung,

- Figur 4: eine perspektivische Darstellung des Schließelementes,
- Figur 5: eine teilweise Frontansicht der Frontwand des Fahrtschreibers gemäß Figur 2,
- Figur 6: eine Schnittdarstellung der Schließvorrichtung gemäß der Schnittlinie 1 in Figur 2 mit einer in der Lese-/Schreibposition befindlichen Datenkarte,
- Figur 7: eine Schnittdarstellung gemäß Figur 6, bei der das Lese/Schreibaggregat für die Aufnahme einer Datenkarte bereit ist.

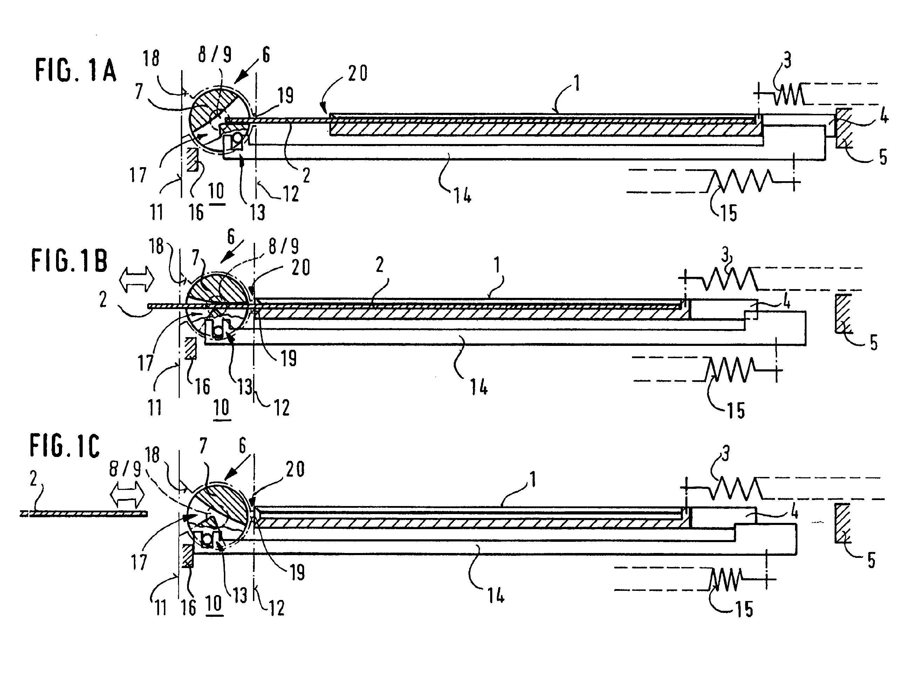

Die Figur 1A zeigt, weitgehend schematisiert eine Kartenaufnahme 1, auf der eine Datenkarte 2 beispielsweise mittels übergreifender, nicht näher bezeichneter Leisten oder Leistenelemente gehaltert ist. Die Kartenaufnahme 1 befindet sich in dem in Figur 1 A dargestellten Zustand in der Lese-/Schreibposition, das heißt, sie liegt unter der Wirkung einer Zugfeder 3 mittels eines Fortsatzes 4 an einem ortsfesten Anschlag 5 an. Eingangsseitig ist der Kartenaufnahme 1 eine Schließvorrichtung 6 zugeordnet, die bei dem in den Figuren 1A, 1B und 1C gewählten Ausführungsbeispiel ein weitgehend zylindrisches bzw. trommelförmiges Schließelement 7 aufweist, das mittels Lagerzapfen 8, 9 in geeigneter Weise drehbar gelagert ist. Dabei kann das Schließelement 7 in der Frontwand 10 eines Gerätes, beispielsweise eines Fahrtschreibers, der mit einem Lese-/Schreibaggregat für Datenkarten ausgerüstet ist, oder auch von der Frontwand 10 unabhängig gelagert sein. Wesentlich ist, daß sich die geometrische Achse des Schließelementes 7 zwischen einer Frontebene bzw. Frontfläche 11 der Frontwand 10 und einer Eingangsebene 12 einer den Datenkarten 2 zugeordneten Aufnahme oder von Transportmitteln befindet. In diesem Falle fällt die Eingangsebene 12 mit der Stirnfläche der beispielsweise taschenartig ausgebildeten Kartenaufnahme 1, wenn diese in der Eingabe-/Entnahmeposition steht zusammen.

Wie der Figur 1A ferner noch entnommen werden kann, ist mit dem Schließelement 7 über eine Stift-Schlitz-Verbindung 13 eine Schubstange 14 gekoppelt, die ihrerseits unter der Wirkung einer Zugfeder 15 steht und einerseits in den Bewegungsweg der Kartenaufnahme 1 eingreift, andererseits mit einem Anschlag 16 zusammenwirkt. Das Schließelement 7 selbst weist eine diametrale Öffnung 17 auf, deren begrenzende Flächen im wesentlichen zwei sich gegenüberliegende keilförmige Freisparungen bilden. Diese sind so bemessen, daß beim Verschwenken des Schließelementes 7 mittels der Schubstange 14 bei eingegebener Datenkarte 2 eine auch relativ weite, trichterförmige Einstecköffnung 18 verschließbar und im entgegengesetzten Falle, das heißt bei einer gemäß Figur 1C für die Eingabe einer Datenkarte 2 freien Kartenaufnahme 1, eine Führungsöffnung 19 bzw. der Einführspalt 20 der Kartenaufnahme 1 abdeckbar ist, womit bei offener Einstecköffnung 18 das Eindringen von Schmutz und Wasser in das Lese-/Schreibaggregat weitgehend vermieden werden kann. Zweckmäßigerweise ist die nach außen weisende Freisparung des Schließelementes 7 derart gestaltet, daß die Begrenzungsflächen der Freisparung in der "Offen-Stellung" gemäß Figur 1C bündig sind mit den Begrenzungsflächen der Einstecköffnung 18. Erwähnenswert ist ferner, daß die diametrale Öffnung 17 im zentralen Bereich des Schließelementes 7 bis auf einen die Datenkarten 2 führenden, nicht näher bezeichneten Schlitz verjüngt ist. Diese Führung ermöglicht eine keilgetriebliche Wirkung zwischen einer Datenkarte 2 und dem Schließelement 7, das heißt, das Schließelement 7 wird beim Eingeben einer Datenkarte 2 gegen die Wirkung der Zugfeder 15 verschwenkt und auf diese Weise der Zugang zur Kartenaufnahme 1 freigegeben.

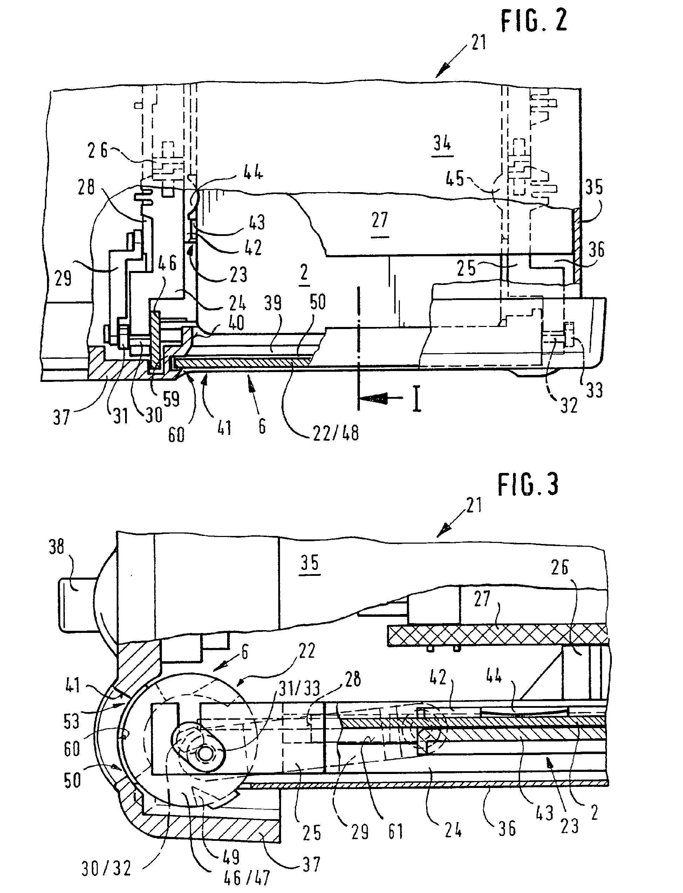

Mit der Figur 1 B ist eine Zwischenstellung dargestellt, bei der die Datenkarte 2 entweder in die Kartenaufnahme 1 eingeschoben ist, wobei nachfolgend durch Weiterbewegen in Pfeilrichtung eine Transportfunktion der Kartenaufnahme 1 ausgelöst wird oder die Datenkarte 2 aus der in Figur 1A gezeigten Lese-/Schreibposition in die Entnahmeposition transportiert worden ist. In dieser Stellung liegt das Schließelement 7 unter der Wirkung der Zugfeder 15 auf der Datenkarte 2 auf und schwenkt nach dem Entnehmen der Datenkarte 2 in die in der Figur 1C gezeigte Position ein. Die Teildarstellungen eines Fahrtschreibers 21 gemäß den Figuren 2 und 3 zeigen eine bevorzugte Weiterentwicklung des in den Figuren 1A, 1B und 1C dargestellten Prinzips der Schließvorrichtung 6 mit einem Schließelement 22, welches in einer Kartenaufnahme 23 seitlich zugeordneten, als Führungsschienen dienenden Wandelementen 24, 25 gelagert ist. Die Wandelemente 24, 25 ihrerseits sind mittels geeigneter Distanzkörper, von denen einer mit 26 bezeichnet ist, an der Leiterplatte 27 des Fahrtschreibers 21 befestigt. Mit 28 ist eine Schubstange bezeichnet, die ebenfalls an einem der Wandelemente 24, 25 geführt ist und über eine Schubkurbel 29 gelenkig mit einem an einem Lagerzapfen 30 des Schließelementes 22 angeformten Hebelarm 31 verbunden ist. Vorzugsweise ist das Schließelement 22 symmetrisch gestaltet, so daß auch an dem zweiten Lagerzapfen 32 ein Hebelarm 33 angeformt ist.

Von den Gehäuseelementen des Fahrtschreibers 21 ist mit 34 eine Deckelplatte, mit 35 eine Seitenwand und mit 36 ein Bodenblech bezeichnet. Ein weiteres Gehäuseelement, eine Frontblende bzw. Frontwand ist mit 37 bezeichnet. Letztere ist bekanntlich Träger verschiedener Funktionselemente wenigstens jedoch eines nicht sichtbaren Displays und mehrerer Betätigungselemente, von denen eines mit 38 bezeichnet ist und beispielsweise dem Ansteuern eines die Ausgabe einer Datenkarte 2 bewirkenden Antriebes dient. Ferner ist an der Innenseite der Frontwand 37 eine Brücke 39 angeformt, in welcher ein dem Querschnitt der Datenkarten 2 entsprechender Führungsschlitz 40 ausgebildet ist, der das innere Ende einer in der Frontwand 37 relativ weit ausgeformten, trichterförmigen Einstecköffnung 41 bildet. Die dem Führungsschlitz 40 nachgestellte an der Kartenaufnahme 23 vorgesehene Halterung, in die einzugebende Datenkarten 2 eingeschoben werden müssen, wird von einem frontseitig offenen Rahmen 42, der an einer Auflage 43 angeformt ist und an dem Rahmen 42 ausgebildeten Niederhaltern 44, 45 gebildet.

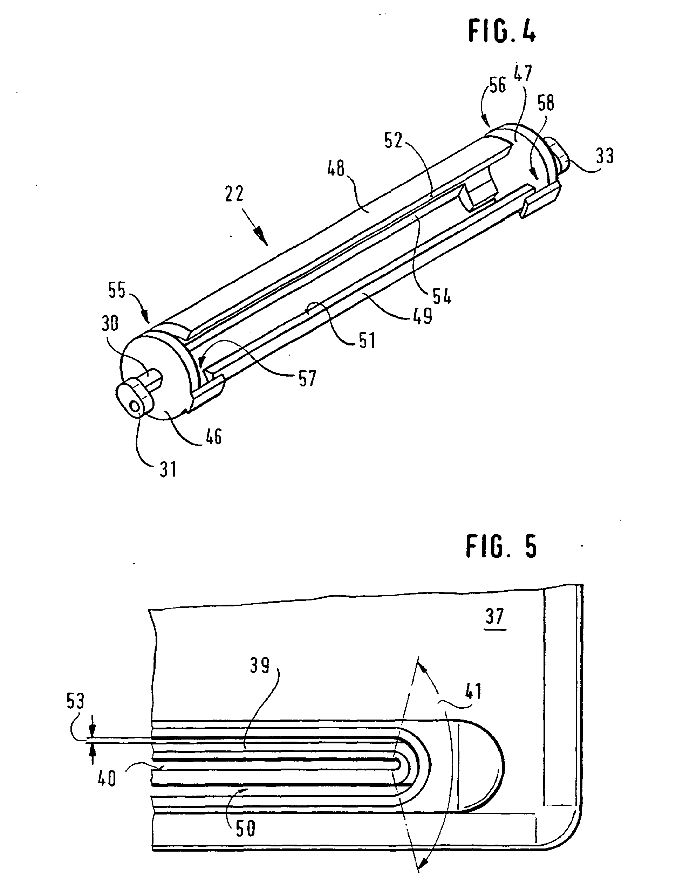

Das Schließelement 22 ist derart ausgebildet und zwischen der Frontwand 37 und der Kartenaufnahme 23 gelagert, daß es beim Verschwenken entweder die Brücke 39 umgreift, mit anderen Worten, in die trichterförmige Einstecköffnung 41 eingreift oder den Zugang zu der Halterung der Kartenaufnahme 23 abdeckt. Wie aus der Figur 4 hervorgeht stellt das Schließelement 22 eine segmentierte Trommel dar, wobei zwischen Wangen 46 und 47 ein erstes Zylindersegment 48 und ein zweites Zylindersegment 49 ausgebildet sind. Das erste Zylindersegment 48 dient dem vorzugsweisen überlappenden Verschließen des Führungsschlitzes 40, das zweite Zylindersegment 49 ist für ein bündiges Schließen des in der Einstecköffnung 41 der Frontwand 37 ausgebildeten, dem Zylindersegment 48 zugeordneten Eintauchschlitzes 50 vorgesehen, und zwar mit einer im wesentlichen radial ausgebildeten Stirnfläche 51. Dem gleichen Zweck dient eine an dem Zylindersegment 48 ausgebildete Stirnfläche 52, die einen dem Zylindersegment 48 zugeordneten Austrittschlitz 53 in der "Offen-Stellung" der Schließvorrichtung bündig abschließt. Eine andere an dem Zylindersegment 48 vorgesehene Stirnfläche 54 ist derart gegen die geometrische Achse des Schließelementes 22 weisend ausgebildet, daß das Schließelement 22 beim Eingeben einer Datenkarte 2 infolge einer keilgetrieblichen Wirkung zwischen der Stirnfläche 54 und der Datenkarte 2 verschwenkt wird. Mit 55 und 56 sowie 57 und 58 sind Freisparungen bezeichnet, die ein Vorbeischwenken der Zylindersegmente 48, 49 an die Brücke 39 mit der Frontwand 37 verbindenden Pfeilern, von denen einer mit 59 bezeichnet ist, ermöglichen. An dieser Stelle sei noch erwähnt, daß die die Seitenwände der Einstecköffnung 41 bildenden Pfeiler 59 jeweils mit einer bogenförmigen Nut 60 versehen sind um insbesondere zwischen den Zylindersegment 48 und der Frontwand 37 eine Labyrinthdichtung zu schaffen.

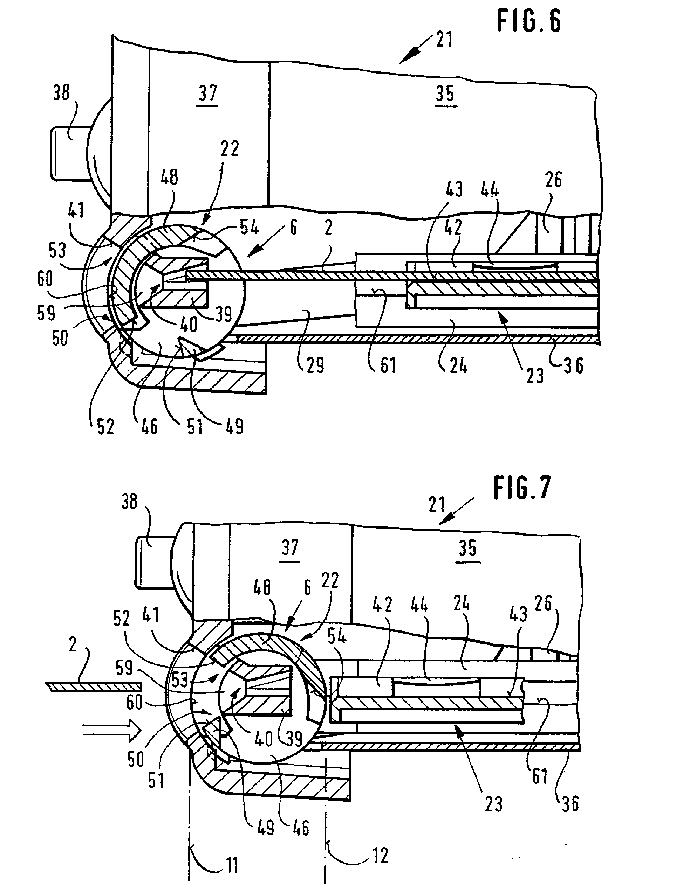

Ferner sei noch darauf hingewiesen, daß mit 61 eine in dem Wandelement 24 ausgebildete der Kartenaufnahme 23 zugeordnete Führungsnut 61 bezeichnet ist. Diese und eine parallel in dem Wandelement 25 vorgesehene Führungsnut sind derart ausgebildet, daß die Kartenaufnahme 23 gegenüber der mit der Figur 6 dargestellten Lese-/Schreibposition, bei der eine eingegebene Datenkarte 2 mit einem der Leiterplatte 27 zugeordneten Kontaktfedersatz in Verbindung steht, in der "Offen-Stellung" der Schließvorrichtung gemäß Figur 7 abgesenkt ist. Außerdem ist es aus fertigungs- und montagetechnischen Gründen denkbar, die an der Frontwand 37 angeformte Brücke 39 den Wandelementen 24, 25 zuzuordnen. Entscheidend ist in diesem Zusammenhang, daß der die Datenkarten 2 ausrichtende Führungsschlitz 40 von dem Schließelement 22 umgriffen ist, und zwar, abhängig vom Vorhandensein oder Nichtvorhandensein einer Datenkarte 2 in der Lese-/Schreibposition, entweder an der Einstecköffnung 41 oder an der der Kartenaufnahme 23 zugewandten Seite. Ferner sei noch erwähnt, daß mit einer zweiteiligen Ausbildung des Schließelementes 22 dieses so gestaltet werden kann, daß eine relativ hohe Steifigkeit erzielt wird.

## Patentansprüche

1. Schließvorrichtung (6) für ein Lese-/Schreibaggregat für Datenkarten, wobei das Lese-/Schreibaggregat eine mit einer Einstecköffnung (18) für die Datenkarten (2) versehene Frontwand (10) und eine die Datenkarten (2) in der Lese-/Schreibposition halternde Kartenaufnahme (23) umfasst, wobei die Schließvorrichtung (6) ein Schließelement (7, 22) aufweist derart, dass es den Zugang in das Lese-/Schreibaggregat, wenn letzteres mit einer Datenkarte (2) belegt ist, verhindert und das Schließelement (7, 22) drehbar gelagert und derart angeordnet ist, dass sich die geometrische Achse des Schließelementes (7, 22) in einem Zwischenraum zwischen der Frontfläche (11), der Frontwand (10) und der Eingangsebene (12) der Kartenaufnahme (1, 23) befindet, wobei das Schließelement (7, 22) anderenfalls bei nicht mit der Datenkarte (2) belegtem Lese-/Schreibaggregat den Zugang derart sperrt, dass die Sperrung mit dem Eingeben einer Datenkarte (2) aufhebbar ist, **dadurch gekennzeichnet, dass** das Schließelement (22) als segmentierte Trommel ausgebildet ist, wobei zwischen Lagerzapfen (30, 32) tragenden Wangen (46, 47) wenigstens ein Zylindersegment (48) vorgesehen und derart geformt ist, dass, bezogen auf die Trommel, eine achsparallele Stirnfläche (54) gegen die geometrische Achse weisend ausgebildet ist oder dass das Schließelement (7) als weitgehend zylindrisches, mit Lagerzapfen (8, 9) versehenes Teil ausgebildet ist, wobei eine diametrale Öffnung (17) derart ausgeformt ist, dass die begrenzenden Flächen der Öffnung (17) im wesentlichen zwei sich gegenüberliegende keilförmige Freisparungen bilden und dass das Schließelement (7, 22) mittels der Datenkarte (2) betätigbar ist.

2. Schließvorrichtung nach Anspruch 1, **dadurch gekennzeichnet, daß** das Schließelement (7, 22) derart ausgebildet und gelagert ist, daß es abhängig vom Vorhandensein/Nichtvorhandensein einer Datenkarte (2) in der Lese-/Schreibposition entweder vor oder nach einem den Datenkarten (2) zugeordneten Führungsschlitz (40) in den Bewegungsweg der Datenkarten (2) eingreift.

3. Schließvorrichtung nach Anspruch 1, **dadurch gekennzeichnet, daß** das Schließelement (7, 22) in in der Frontwand (10, 37) ausgeformten Lagerungen gelagert ist.

4. Schließelement nach Anspruch 1, **dadurch gekennzeichnet, daß** das Schließelement (7, 22) in die Kartenaufnahme (1, 23) seitlich begrenzenden Wandelementen (24, 25) gelagert ist.

5. Schließelement nach Anspruch 1, **dadurch gekennzeichnet, daß** Mittel für einen selbsttätigen Transport der Datenkarten (2) zwischen einer Eingabe-/Entnahmeposition und einer Lese-/Schreibposition vorgesehen sind, daß eine mit den Transportmitteln in Wirkverbindung stehende, verschiebbar gelagerte Schubstange (14, 28) vorgesehen ist und daß die Schubstange (14, 28) mit dem Schließelement (7, 22) gelenkig gekoppelt ist.

6. Schließelement nach Anspruch 1, **dadurch gekennzeichnet, daß** die Einstecköffnung (41) in der Frontwand (37) durch eine an der Frontwand (37) angeformte, nach innen weisende Brücke (39) verlängert ist, daß die Brücke (39) mit einem die Einstecköffnung (41) verlängernden Führungsschlitz (40) versehen ist, daß parallel zu dem Führungsschlitz (40) ein dem Durchtritt des Zylindersegmentes (48) dienender Austrittsschlitz (53) versehen ist und daß das Schließelement (22) derart ausgebildet und gelagert ist, dass das Zylindersegment (48) bei in Lese-/Schreibposition befindlicher Datenkarte (2) den Führungsschlitz (40) wenigstens so weit umgreift, daß die Einstecköffnung (41) verschlossen ist.

7. Schließvorrichtung nach Anspruch 6, **dadurch gekennzeichnet, daß** die Einstecköffnung (41) frontseitig trichterartig erweitert ist und daß in den den Trichter flankierenden Wandpartien einerseits der Austrittsschlitz (53) andererseits ein dem Zylindersegment (48) zugeordneter Eintauchschlitz (50) ausgebildet sind.

8. Schließvorrichtung nach Anspruch 6, **dadurch gekennzeichnet, daß** an dem Schließelement (22) ein zweites Zylindersegment (49) ausgebildet ist derart, daß der Abstand zwischen dem ersten und dem zweiten Zylindersegment (48, 49) in Umfangsrichtung gleich ist dem Weg, den das erste Zylindersegment (48) beim Verschwenken des Schließelementes (22) innerhalb der Einstecköffnung (41) durchläuft.

## Claims

1. Closing device (6) for a reading/writing unit for data cards, whereby the reading/writing unit comprises a front wall (10) that is provided with an input opening (18) for the data cards (2) and a card receiver (23) that holds the data cards (2) in the reading/writing position, whereby the closing device (6) encompasses a closing member (7, 22) in such a manner that it prevents access into the reading/writing unit, if the latter is occupied with a data card (2), and the closing member (7, 22) is supported so as to be rotatable and is disposed in such a manner that the geometric axis of the closing member (7, 22) is located in a clearance between the front face (11), the front wall (10), and the insertion plane (12) of the card receiver (1, 23), whereby, if the reading/writing unit is not occupied with the data card (2), the closing member (7, 22) otherwise blocks access in such a manner that the blocking can be overridden with the insertion of a data card (2), **characterized in that** the closing member (22) is configured as a segmented drum, whereby at least one cylinder segment (48) is provided and formed in such a manner between flanks (46, 47) that support bearing pins (30, 32) that, relative to the drum, an axis-parallel end face (54) is configured so as to face the geometric axis or that the closing member (7) is configured as a largely cylindrical part that is provided with support pins (8, 9), whereby a diametric opening (17) is moulded in such a manner that the limiting surfaces of the opening (17) essentially form two opposite wedge-shaped recesses and that the closing member (7, 22) can be actuated by means of the data card (2).

2. Closing device according to Claim 1,
**characterized in that** the closing member (7, 22) is configured and supported in such a manner that it engages into the movement path of the data cards (2) as a function of the presence/absence of a data card (2) in the reading/writing position either upstream of or downstream from a guide slit (40) assigned to the data cards (2).

3. Closing device according to Claim 1,
**characterized in that** the closing member (7, 22) is supported in bearings formed in the front wall (10, 37).

4. Closing member according to Claim 1,
**characterized in that** the closing member (7, 22) is supported in the wall members (24, 25) that laterally limit the card receiver (1, 23).

5. Closing member according to Claim 1,
**characterized in that** provision is made for means for an automatic transport of the data cards (2) between an input/removal position and a reading/writing position, that provision is made for a push rod (14, 28) that is in effective connection with the transport means and that is supported so as to be displaceable, and that the push rod (14, 28) is coupled with the closing member (7, 22) in an articulated manner.

6. Closing member according to Claim 1,
**characterized in that** the input opening (41) in the front wall (37) is extended by a bridge (39) that is moulded on the front wall (37) and that faces inwardly, that the bridge (39) is provided with a guide slit (40) that extends the input opening (41), that an exit slit (53) that serves for the passage of the cylinder segment (48) is provided in parallel to the guide slit (40), and that the closing member (22) is configured and supported in such a manner that, with the data card (2) being in reading/writing position, the cylinder segment (48) encompasses the guide slit (40) at least so far that the input opening (41) is closed.

7. Closing device according to Claim 6,
**characterized in that** the front side of the input opening (41) is expanded in a funnel-shaped manner and that, on the one hand, the exit slit (53) and, on the other hand, a dipping slit (50) that is assigned to the cylinder segment (48) are configured in the wall parts that flank the funnel.

8. Closing device according to Claim 6,
**characterized in that** a second cylinder segment (49) is configured at the closing member (22) in such a manner that the distance between the first and the second cylinder segment (48, 49) is the same in circumferential direction as the path passed through by the first cylinder segment (48) in response to the pivoting of the closing member (22) within the input opening (41).

## Revendications

1. Dispositif d'obturation (6) pour un groupe de lecture et écriture pour cartes à puces, où le groupe de lecture et écriture comprend un panneau avant (10) doté d'un orifice d'insertion (18) pour les cartes à puces (2) et un support (23) de cartes maintenant les cartes à puces (2) dans la position de lecture et écriture, où le dispositif d'obturation (6) comporte un organe d'obturation (7, 22) tel qu'il empêche l'accès au groupe de lecture et écriture, lorsque celui-ci est occupé par une carte à puces (2), et où l'organe d'obturation (7, 22) est suspendu en rotation et disposé de manière telle que l'axe géométrique de l'organe d'obturation (7, 22) se trouve dans un espace intermédiaire entre la surface frontale (11), le panneau avant (10) et le plan d'entrée (12) du support de cartes (1, 23), où, sinon, l'organe d'obturation (7, 22), si le groupe de lecture et écriture n'est pas occupé par la carte à puces (2), bloque l'accès de manière telle que le blocage peut être supprimé par l'insertion d'une carte à puces (2), **caractérisé** p a r le fait que l'organe d'obturation (22) est conçu sous la forme de tambour segmenté, au moins un segment cylindrique (48) étant prévu entre des joues (46, 47) portant des tourillons (30, 32) et conçu de manière telle que, par rapport au tambour, une surface frontale (54) parallèle à l'axe est orientée à l'opposé de l'axe géométrique et que l'organe d'obturation (7) est conçu comme pièce largement cylindrique dotée de tourillons (8, 9), une ouverture diamétrale (17) étant configurée de manière telle que les surfaces limites de l'ouverture (17) forment, pour l'essentiel, deux découpes en forme de biseau se faisant face et que l'organe d'obturation (7, 22) peut être actionné par la carte à puces (2).

2. Dispositif d'obturation selon la revendication 1, **caractérisé par le fait que** l'organe d'obturation (7, 22) est conçu et suspendu de manière telle qu'il intervient dans le parcours de déplacement des cartes à puces (2), en fonction de la présence ou de l'absence d'une carte à puces (2) dans la position de lecture et écriture, ou bien avant ou bien après une fente de guidage (40) correspondant aux cartes à puces (2).

3. Dispositif d'obturation selon la revendication 1, **caractérisé par le fait que** l'organe d'obturation (7, 22) est suspendu dans des paliers ménagés dans le panneau avant (10, 37).

4. Dispositif d'obturation selon la revendication 1, **caractérisé par le fait que** l'organe d'obturation (7, 22) est suspendu dans des éléments de paroi (24, 25) limitant latéralement le support de cartes (1, 23).

5. Dispositif d'obturation selon la revendication 1, **caractérisé par le fait qu'**il est prévu des moyens pour un transport automatique des cartes à puces (2) entre une position d'introduction et de restitution et une position de lecture et écriture, qu'il est prévu une bielle (14, 28) concourant avec les moyens de transport et suspendue en translation et que la bielle (14, 28) est couplée d'une façon articulée à l'organe d'obturation (7, 22).

6. Dispositif d'obturation selon la revendication 1, **caractérisé par le fait que** l'orifice d'insertion (41) dans le panneau avant (37) est prolongé par un portique (39) ménagé sur le panneau avant (37) et orienté vers l'intérieur, que le portique (39) est doté d'une fente de guidage (40) prolongeant l'orifice d'insertion (41), que, parallèlement à la fente de guidage (40), il est doté d'une fente de sortie (53) servant au passage du segment cylindrique (48) et que l'organe d'obturation (22) est conçu et suspendu de manière telle que le segment cylindrique (48), lorsque la carte à puces (2) se trouve dans la position de lecture et écriture, entoure la fente de guidage (40) au moins suffisamment pour que l'orifice d'insertion (41) soit obturé.

7. Dispositif d'obturation selon la revendication 6, **caractérisé par le fait que** l'orifice d'insertion (41) est agrandi en forme d'entonnoir du côté avant et que, dans les parties des joues bordant l'entonnoir, sont formées d'une part la fente de sortie (53), d'autre part une fente d'insertion (50) correspondant au segment cylindrique (48).

8. Dispositif d'obturation selon la revendication 6, **caractérisé par le fait qu'**un deuxième segment cylindrique (49) est ménagé sur l'organe d'obturation (22) de manière telle que la distance entre le premier et le deuxième segment cylindrique (48, 49) est, dans le sens de la circonférence, égale à la course que le premier segment cylindrique (48) exécute lorsque l'organe d'obturation (22) pivote à l'intérieur de l'orifice d'insertion (41).
